# EUROPÄISCHE PATENTANMELDUNG

(11) **EP 3 604 794 A1**
(43) Veröffentlichungstag der Anmeldung: **05.02.2020**
(21) Anmeldenummer: 19188063.2
(22) Anmeldetag: 24.07.2019
(51) Int. Cl.: F03B 7/00, F03B 17/06

(54) **WASSERKRAFTWERK**

(30) Priorität: 02.08.2018 DE 102018118800
(71) Anmelder: Hadzic, Ismet, 13189 Berlin (DE)
(72) Erfinder: Hadzic, Ismet, 13189 Berlin (DE)
(74) Vertreter: Müller, Wolfram Hubertus

(57) **Zusammenfassung**

Die Erfindung betrifft ein Wasserkraftwerk für freifließende Bäche und Flüsse umfassend ein Wasserrad und einen mit dem Wasserrad gekoppelten Generator. Es ist vorgesehen, dass das Wasserrad (1) höhenverstellbar an einem Tragelement (3, 7, 8) angeordnet ist, das Wasserkraftwerk den Generator (6) aufweist und jeweils mindestens einen Sensor zur Erfassung des Pegelstandes (4) und dessen Änderungen sowie zur Feststellung von Treibgut und eine Steuereinheit (2) mit einem Stellmotor besitzt.

## Beschreibung

Die Erfindung betrifft ein Wasserkraftwerk mit einem Wasserrad zur Energieerzeugung durch Nutzung der kinetischen Energie eines freifließenden Flusses oder Baches.

Die Nutzung der Strömungsenergie von Flüssen und Bächen hat eine lange Tradition. Zunehmend werden derartige Wasserenergiepotenziale auch zur Elektroenergiegewinnung verwendet.

Die klassische Nutzung der Wasserenergie erfolgte durch den Aufstau mittels Wehr oder durch Kanalisierung des Wassers.

Künftig wird es jedoch erforderlich sein, auch die Energie des Wassers von Flüssen und Bächen mit einem niedrigen Potenzial für die Elektroenergieerzeugung nutzbar zu machen.

Aus DE 102 18 443 B4, DE 10 2010 050 878 B3, DE 10 2011 008 131 A1 und EP 2 521 855 B1 gehen zu diesem Zweck jeweils unterschlächtige Wasserräder zur Energieerzeugung hervor, die einen mit der Drehachse verbundenen Generator aufweisen und die sich im Wesentlichen durch die konstruktive Ausgestaltung der Wasserschaufeln und deren Anordnung am Wasserrad unterscheiden. DE 103 27 760 A1 beschreibt zudem die Anordnung des Wasserrades in einem Gebäude.

EP 2 601 402 B1 offenbart eine Wasserkraftmaschine, die einen mittels eines Riementriebes mit dem Schaufelrad verbundenen Generator aufweist: Das Schaufelrad ist durch eine kastenförmige Konstruktion drehbar in einem Gerinne festgelegt. Ein Bodenblech und beidseitig angeordnete Bleche sollen ein Durchströmen des Wassers unter dem Schaufelrad hindurch verhindern. Die Wasserkraftmaschine ist mit Hilfe eines Rahmens und Führungsstangen an der kastenförmigen Konstruktion abgestützt und kann mit hydraulischen Zylinderkolbenaggregaten oder Spindeln in Höhenrichtung verschoben und so in eine Außerbetriebs- oder Wartungsposition gebracht werden.

DE 20 2012 010 149 U1 beschreibt ein Wasserkraftwerk zur Nutzung der potenziellen Wasserenergie. Das Wasserkraftwerk umfasst eine Leitvorrichtung zur Zuführung des Wassers sowie ein hydrodynamisches Schaufelrad und einen Generator die jeweils auf einer Schwimmplattform befestigt sind. Mit dieser technischen Lösung soll Wasser von einem ersten Niveau auf ein darunterliegendes zweites Niveau gefördert und dabei die potenzielle Energie des Wassers durch das Schaufelrad aufgenommen werden. Mit der auf dem Unterwasser schwimmend verankerten Plattform wird die Lage des Schaufelrades definiert und durch die Schwimmlage der Plattform konstant gehalten.

Bekannt ist auch ein schwimmendes Wasserkraftwerk, das die kinetische Energie eines Flusses aufnimmt. Grundlage des Wasserkraftwerkes sind ein oder mehrere Schwimmkörper als Träger von einem oder mehreren unterschlächtigen Wasserrädern. Es ist mittels Seilen am Ufer verankert oder mittels eines Ankers in der Flusssohle positioniert.
Bekannt ist aus DE 20 2008 015 093 U1 auch, dass das Wasserrad in einem in ein strömendes Gewässer eingetauchten Strömungskanal angeordnet sein kann.

Aus EP 2 286 083 B1 ist ein Wasserrad mit einem integrierten Generator zu entnehmen, wobei das Wasserrad über zugeordnete Wasserschaufeln durch strömendes, schießendes oder freifallend abfließendes Wasser zur Stromerzeugung antreibbar ist. Das Wasserrad weist ein mit ihm konzentrisch verbundenes Ringelement und Permanentmagneten zur Bildung eines Rotors des Generators auf. Als Stator sind elektrische Spulen in Zuordnung zu den Permanentmagneten angeordnet.

DE 198 50 948 B4 offenbart ein Wasserkraftwerk zur dreidimensionalen Festlegung in oder an kleinen bis mittelgroßen Wasserläufen mit einem stark schwankenden Wasserpegel. Es besteht aus einem etwa U-förmigen Gerüst mit einem als Rinne ausgebildeten und abwärts geneigten Mittelteil und zwei wasserdichten Strömungsleitflächen als Seitenschenkel. Zwischen den Seitenschenkeln ist eine quer verlaufende drehbar gelagerte Welle mit einem darauf befestigten unterschlächtigen Wasserrad vorgesehen. Durch einen Riementrieb ist ein Generator mit der quer verlaufenden Welle gekoppelt. Um die Funktion des Wasserkraftwerkes auch bei einem schwankenden Wasserpegel sicherzustellen ist im Eintrittsbereich des Wassers eine mit den Seitenströmungsflächen verbundene Barriere vorgesehen, deren horizontale Unterkante mit der Bodenplatte einen Wassereintrittsschlitz bildet.

Mit der überwiegenden Anzahl der dargestellten technischen Lösungen verbindet sich das Problem, dass sie für die Energiegewinnung freifließender Flüsse und Bäche mit wechselndem Pegelstand nicht geeignet sind. Einige der genannten technischen Lösungen sind außerdem konstruktiv verhältnismäßig aufwendig gestaltet und daher besonders störanfällig und kostenintensiv.

Bei Wasserkraftwerken auf einer Schwimmplattform besteht das Problem in der sicheren Fixierung des Pontons und darin, dass der Wasserdruck die Pontons in der Strömung leicht verkantet und damit die optimale Ausnutzung der Strömungsenergie beeinträchtigen kann. Auch Treibgut stellt eine Gefahr für das Schaufelrad dar. Pontonlösungen sind darüber hinaus an ausreichende Wassertiefen gebunden und stellen bei Hochwasser und einer damit verbundenen starken Strömung selbst eine Gefahr da, zu Treibgut zu werden.

Aufgabe der Erfindung ist es daher ein Wasserkraftwerk zur Energieerzeugung für freifließende Flüsse und Bäche in einer möglichst einfachen und wartungsarmen Ausführung bereitzustellen, dass sich selbständig an wechselnde Pegelstände anpasst.

Erfindungsgemäß wird die Aufgabe durch ein Wasserkraftwerk für freifließende Bäche und Flüsse gelöst, umfassend ein Wasserrad und einen mit dem Wasserrad gekoppelten Generator wobei das Wasserrad höhenverstellbar an einem Tragelement angeordnet ist, das Wasserkraftwerk für die Höhenpositionierung des Wasserrades jeweils mindestens einen Sensor zur Erfassung des Pegelstandes und dessen Änderungen sowie zur Feststellung von Treibgut und eine Steuereinheit mit einem Stellmotor aufweist.

Mit der Erfindung verbindet sich der besondere Vorzug, dass mit ihr ein an Flüssen und Bächen nahezu universell und flexibel einsetzbares Wasserkraftwerk zur Verfügung gestellt wird.

Die Erfindung ist ökologisch nachhaltig, da der Wasserlauf nicht denaturiert, also umgelenkt werden muss. Fischwanderungen werden nicht beeinträchtigt.

Das erfindungsgemäße Wasserkraftwerk ist für kleine und flache Bäche ebenso geeignet wie für größere Flüsse. Es passt sich selbständig an sich verändernde Pegelstände an und kann selbst bei niedrigen Wasserständen arbeiten. Die vorgeschlagene technische Lösung ist zudem kostengünstig und wartungsarm. Mechanische und Steuerungsbauelemente sind über Wasser positioniert.

Ein besonderer Vorzug besteht darüber hinaus darin, dass mehrere Wasserräder nebeneinander oder hintereinander angeordnet werden können.

Vorzugsweise ist das Tragelement eine hydraulisch geführte höhenverstellbare Aufhängung.

Besonders bevorzugt ist die hydraulisch geführte Aufhängung gelenkig und/oder mehrarmig ausgebildet.

Vorzugsweise besteht bei einer weiteren Ausführungsform der Erfindung das Tragelement aus einer Ständerkonstruktion mit zwei vertikal angeordneten Stützen zwischen denen das Wasserrad höhenverstellbar angeordnet ist.

Typischerweise ist das zwischen den Stützen vorgesehene Wasserrad mit seiner Halterung mittels hydraulischen Zylinderkolbenaggregaten oder Spindeln vertikal verstellbar.

Besonders bevorzugt wird das Wasserrad an Führungsstangen oder in Aussparungen der Stützen vertikal geführt.

Typischerweise besitzt das Wasserkraftwerk für die Höhenpositionierung des Wasserrades jeweils mindestens einen Sensor zur Ermittlung des Pegelstandes und dessen Veränderungen sowie zur Feststellung von Treibgut.

Bevorzugt ist der Sensor an der Halterung des höhenverstellbaren Wasserrades vorgesehen.

Typischerweise wird die Steuereinheit mit Stellmotor mittels einer externen Stromversorgung oder durch einen Akkumulator gespeist

Gemäß einer weiteren Ausführungsform der Erfindung ist das Tragelement am Uferrand positioniert und sind die Stützen der Ständerkonstruktion am Grund des Flusses beziehungsweise Baches verankert.

Im Folgenden soll die Erfindung an Hand von Zeichnungen näher erläutert werden. Es zeigen
- **Fig. 1**: die Seitenansicht einer Ausführungsform der Erfindung mit einer hydraulisch geführten und gelenkig ausgebildeten Aufhängung;
- **Fig. 2**: die Vorderansicht des erfindungsgemäßen Wasserkraftwerkes gemäß **Fig. 1****;**
- **Fig. 3**: die Seitenansicht der Ausführungsform gemäß **Fig. 1** bei einem niedrigen Wasserpegel;
- **Fig. 4**: die Seitenansicht der Ausführungsform gemäß **Fig. 1** bei einem erhöhten Wasserpegel;
- **Fig. 5**: die Vorderansicht eines erfindungsgemäßen Wasserkraftwerkes mit einer Ständerkonstruktion;
- **Fig. 6**: die Seitenansicht des Wasserkraftwerkes gemäß **Fig. 5****;**
- **Fig. 7**: die Vorderansicht der Erfindung gemäß **Fig. 5** im Schnitt A - A;
- **Fig. 8**: die Vorderansicht der Erfindung gemäß **Fig. 5** im Schnitt B - B;
- **Fig. 9**: die Vorderansicht eines Wasserkraftwerkes mit Ständerkonstruktion im Betriebszustand,
- **Fig. 10**: die Vorderansicht eines Wasserkraftwerkes mit Ständerkonstruktion nicht im Betriebszustand,
- **Fig. 11 bis 13**: die Seitenansicht eines in Stützen geführten Wasserrades in verschiedenen Positionen.

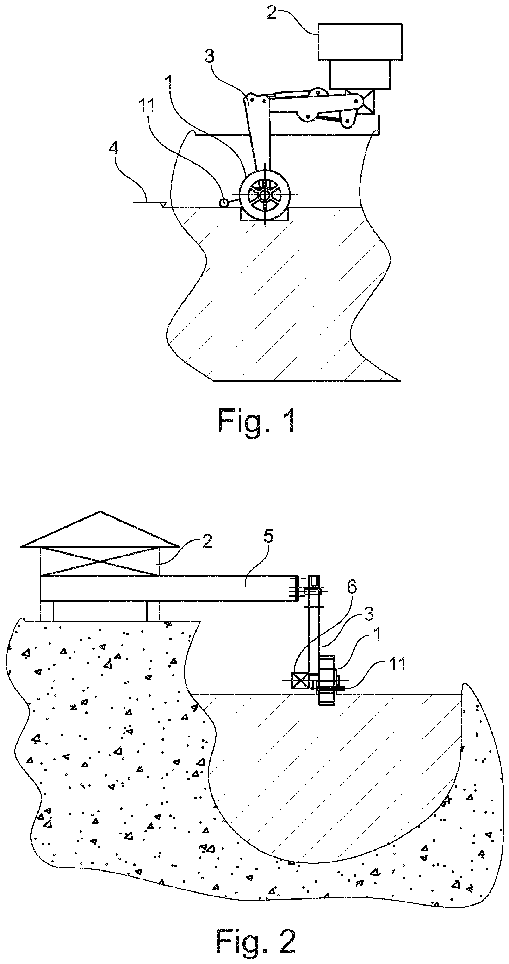

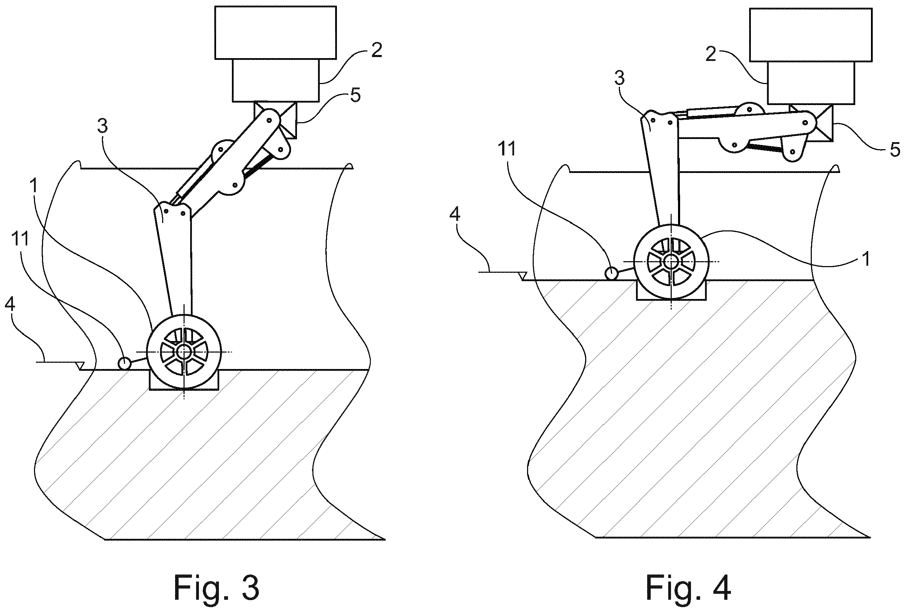

Aus den **Figuren 1 bis 4** geht ein erfindungsgemäßes Wasserkraftwerk hervor das am Ufer eines Baches fest positioniert ist.

Das Wasserrad 1 ist mit dem Generator 6 an dem hydraulisch geführten und gelenkig ausgebildeten Tragelement 3 vorgesehen. Als Generator 6 kann ein Gleich- oder Wechselstromgenerator zum Einsatz kommen. Er ist mit der Drehachse des Wasserrades 1 oder mittels eines Riementriebes mit ihm verbunden. Das Tragelement 3 wiederum ist an dem Träger 5 angeordnet. Am Tragelement 3 können auch mehrere Wasserräder 1 nebeneinander vorgesehenen sein. Ebenso ist denkbar, dass mehrere Tragelemente 3 mit dem Wasserrad 1 hintereinander positioniert sind. Als Wasserrad können unterschlächtige Wasserräder bekannter Art zum Einsatz kommen.

Um Schäden am Wasserrad 1 durch Treibgut zu verhindern ist an der Halterung des Wasserrades 1 der Sensor 11 vorgesehen. Im vorliegenden Beispiel wird dafür ein Druckbügel verwendet. Änderungen des Pegelstandes 4 werden durch den Sensor 11 erfasst für den bei diesem Ausführungsbeispiel ein Schwimmer zum Einsatz kommt.

Die Sensoren 11 sind mit der Steuereinheit 2 verbunden. Mittels des Stellmotors 2 werden die Positionen des Tragelementes 3 und damit auch die des Wasserrades 1 gesteuert. Eine externe Stromversorgung oder ein Akkumulator speisen die Steuereinheit 2 mit dem Stellmotor.

Die durch den Generator 6 erzeugte Elektroenergie wird auf an sich bekannte Art und Weise an Land geleitet.

Mit Wasserkraftwerken gemäß Figuren **1 bis 4** verbindet sich auch der besondere Vorzug, dass sie in Bezug auf den Standort flexibel einsetzbar sind. So können sie zum Beispiel auf fahrbaren Gestellen und Lastkraftwagen vorgesehen sein und können so mobil in Krisengebieten oder bei Naturkatastrophen die Elektroenergieversorgung sichern helfen.

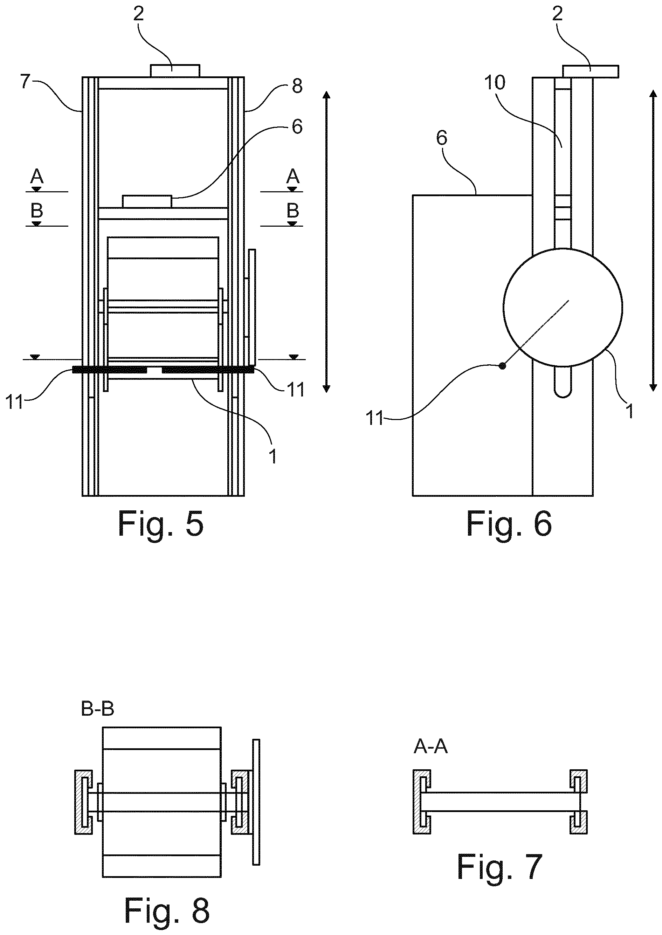

Die **Figuren 5 bis 8** zeigen in schematischer Darstellung ein erfindungsgemäßes Wasserkraftwerk mit einer Ständerkonstruktion bestehend aus den miteinander verbundenen Stützen 7 und 8 zwischen denen das Wasserrad 1 angeordnet und mit dem Generator 6 verbunden ist. In den Aussparungen 10 der Stützen 7 und 8 oder an hier nicht dargestellten Führungsstangen wird das Wasserrad 1 höhenverstellbar geführt.

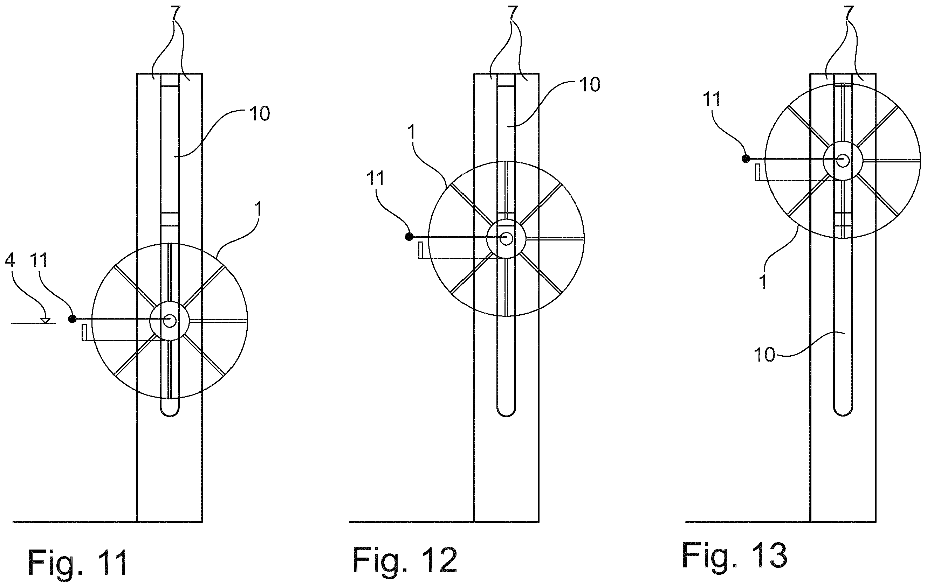

Die **Figuren 11 bis 13** zeigen unterschiedliche Positionen eines in der Aussparung 10 der Stützen 7 und 8 vertikal geführten Wasserrades 1. Die durch den jeweiligen Pegelstand 4 bedingte Arbeitsposition oder die für Revisionen oder für Reparaturen erforderliche Position des Wasserrades 1 wird durch die Steuereinheit 2 mit dem mit ihr verbundenen Stellmotor gesichert. Änderungen des Pegelstandes 4 werden durch den Sensor 11 erfasst und die entsprechenden Informationen an die Steuereinheit 2 mit Stellmotor weitergeleitet.
Deutlich ist zu sehen, dass beidseitig, sowohl an der Stütze 7 als auch an der Stütze 8, die Sensoren 11 vorgesehen sind.

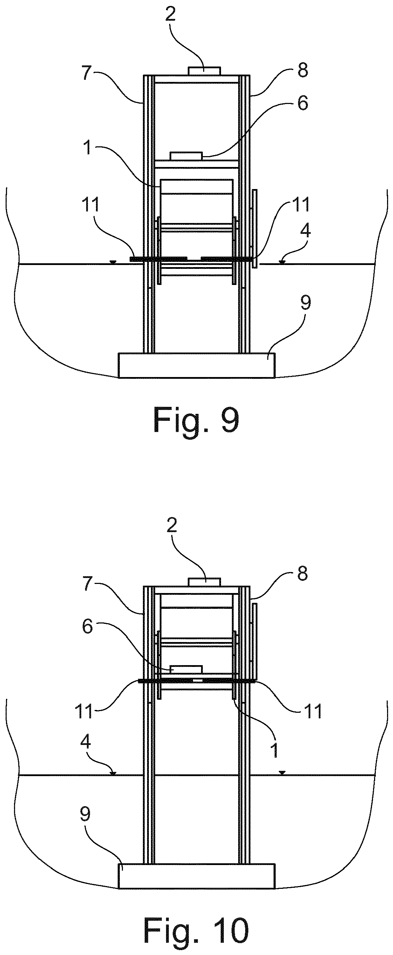

Aus den **Figuren 9 und 10** geht ein erfindungsgemäßes Wasserkraftwerk mit einer Ständerkonstruktion hervor, die mittels der Verankerung 9 fest am Grund des Baches oder Flusses positioniert ist.

### BEZUGSZEICHENAUFSTELLUNG

- 1: Wasserrad
- 2: Steuereinheit mit Stellmotor
- 3: Tragelement
- 4: Pegelstand
- 5: Träger
- 6: Generator
- 7: Stütze
- 8: Stütze
- 9: Verankerung
- 10: Aussparung
- 11: Höhensensor und Treibgutsensor

## Patentansprüche

1. Wasserkraftwerk für freifließende Bäche und Flüsse umfassend ein Wasserrad und einen mit dem Wasserrad gekoppelten Generator, **dadurch gekennzeichnet, dass** das Wasserrad (1) höhenverstellbar an einem Tragelement (3, 7, 8) angeordnet ist, das Wasserkraftwerk den Generator (6) aufweist und jeweils mindestens einen Sensor zur Erfassung des Pegelstandes (4) und dessen Änderungen sowie zur Feststellung von Treibgut und eine Steuereinheit (2) mit einem Stellmotor besitzt.

2. Wasserkraftwerk nach Anspruch 1, **dadurch gekennzeichnet, dass** das Tragelement (3) eine hydraulisch geführte höhenverstellbare Aufhängung ist.

3. Wasserkraftwerk nach Anspruch 2, **dadurch gekennzeichnet, dass** die hydraulisch geführte Aufhängung gelenkig und/oder mehrarmig ausgebildet ist.

4. Wasserkraftwerk nach Anspruch 1, **dadurch gekennzeichnet, dass** das Tragelement eine Ständerkonstruktion mit zwei vertikal angeordneten und miteinander verbundenen Stützen (7, 8) ist zwischen denen das Wasserrad (1) höhenverstellbar angeordnet ist.

5. Wasserkraftwerk nach Anspruch 4, **dadurch gekennzeichnet, dass** das Wasserrad (1) mit seiner Halterung an den Stützen (7, 8) mittels hydraulischen Zylinderkolbenaggregaten oder Spindeln vertikal verstellbar ist.

6. Wasserkraftwerk nach Anspruch 4 oder 5, **dadurch gekennzeichnet, dass** das Wasserrad (1) an Führungsstangen oder in Aussparungen (10) der Stützen (7, 8) vertikal geführt ist.

7. Wasserkraftwerk nach mindestens einem der Ansprüche 1 bis 6, **dadurch gekennzeichnet, dass** für die Höhenpositionierung des Wasserrades (1) jeweils mindestens ein Sensor (11) zur Erfassung des Pegelstandes (4) und dessen Veränderung sowie zur Feststellung von Treibgut vorgesehen ist.

8. Wasserkraftwerk nach mindestens einem der Ansprüche 1 bis 7, **dadurch gekennzeichnet, dass** der Sensor (11) an der Halterung des höhenverstellbaren Wasserrades (1) vorgesehen ist.

9. Wasserkraftwerk nach mindestens einem der Ansprüche 1 bis 8, **dadurch gekennzeichnet, dass** die Steuereinheit (2) mit Stellmotor durch eine externe Stromversorgung oder durch einen Akkumulator gespeist ist

10. Wasserkraftwerk nach mindestens einem der Ansprüche 1 bis 9, **dadurch gekennzeichnet, dass** das Tragelement (3) am Uferrand positioniert ist und die Stützen (7, 8) am Grund des Flusses beziehungsweise Baches mittels einer Verankerung (9) befestigt sind.
